(19) Europäisches Patentamt
European Patent Office
Office européen des brevets

(11) **EP 3 896 760 A1**

(12) **EUROPEAN PATENT APPLICATION**
published in accordance with Art. 153(4) EPC

(43) Date of publication:
**20.10.2021 Bulletin 2021/42**

(21) Application number: **18943305.5**

(22) Date of filing: **13.12.2018**

(51) Int Cl.:
*H01M 4/36* [(2006.01)]          *H01M 4/525* [(2010.01)]
*H01M 4/505* [(2010.01)]          *H01M 10/052* [(2010.01)]

(86) International application number:
**PCT/KR2018/015868**

(87) International publication number:
**WO 2020/122284 (18.06.2020 Gazette 2020/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **POSCO**
  **Pohang-si, Gyeongsangbuk-do 37859 (KR)**
• **Research Institute of Industrial Science & Technology**
  **Pohang-si, Gyeongsangbuk-do 37673 (KR)**
• **POSCO Chemical Co., Ltd**
  **Gyeongsangbuk-do 37918 (KR)**

(72) Inventors:
• **NAM, Sang Cheol**
  **Seoul 02587 (KR)**
• **KIM, Jae Han**
  **Daejeon 35206 (KR)**
• **KIM, Jeong Han**
  **Gumi-si Gyeongsangbuk-do 39184 (KR)**
• **SONG, Jung Hoon**
  **Seoul 07064 (KR)**

(74) Representative: **Potter Clarkson**
  **The Belgrave Centre**
  **Talbot Street**
  **Nottingham NG1 5GG (GB)**

(54) **CATHODE ACTIVE MATERIAL FOR LITHIUM SECONDARY BATTERY, AND LITHIUM SECONDARY BATTERY COMPRISING SAME**

(57)    The present disclosure relates to a positive electrode active material for lithium secondary battery comprising a first compound represented by Chemical Formula 1, and a second compound represented by Chemical Formula 2, wherein, a content of the first compound is 65 wt% or more based on 100 wt% of the positive electrode active material, and a lithium secondary battery comprising the same.

[Chemical Formula 1]          $Li_{a1}Ni_{b1}Co_{c1}Mn_{d1}M1_{e1}M2_{f1}O_{2-f1}$

[Chemical Formula 2]          $Li_{a2}Ni_{b2}CO_{c2}Mn_{d2}M3_{e2}M4_{f2}O_{2-f2}$

wherein, each composition and molar ratio of Chemical Formulas 1 and 2 are as defined in the specification.

EP 3 896 760 A1

【FIG. 2】

## Description

## CROSS-REFERENCE TO RELATED APPLICATION

This application claims priority to and the benefit of Korean Patent Application No. 10-2017-0111408 filed in the Korean Intellectual Property Office on August 31, 2017, the entire contents of which are incorporated herein by reference.

## BACKGROUND OF THE INVENTION

### (a) Field of the Invention

The present disclosure relates to a positive electrode active material for a lithium secondary battery having excellent electrochemical characteristic and thermal stability and a lithium secondary battery including the same.

### (b) Description of the Related Art

The lithium secondary battery has high operation voltage and energy density and can be used for a long time, so it is used as a driving power source for various electronic devices.

This lithium secondary battery is generally manufactured by using a material capable of reversible intercalation/deintercalation of lithium ion as a positive electrode active material and a negative active material, and filling an electrolyte between the positive and negative electrodes including them.

As the positive electrode active material, $LiCoO_2$ is widely used. However, recently, as the use of lithium secondary batteries has expanded from portable information electronic devices to industries such as power tools and automobiles, high-capacity, high power and stability are more required.

Accordingly, Studies on the development of a technology for improving the performance of LiCoO2 and using a lithium nickel-based oxide with a high nickel content as an alternative material such as a three-component system or an olivine-based material is being actively conducted.

The above information disclosed in this Background section is only for enhancement of understanding of the background of the invention, and therefore it may contain information that does not form the prior art that is already known in this country to a person of ordinary skill in the art.

## SUMMARY OF THE INVENTION

Embodiments are to provide a positive electrode active material for a lithium secondary battery having a high energy density and excellent thermal stability, and a lithium secondary battery including the same.

In one aspect, a positive electrode active material for lithium secondary battery according to an exemplary embodiment may comprise a first compound represented by Chemical Formula 1 and a second compound represented by Chemical Formula 2, wherein, a content of the first compound may be 65 wt% or more based on 100 wt% of the positive electrode active material.

[Chemical Formula 1]  $\qquad$ $Li_{a1}Ni_{b1}Co_{c1}Mn_{d1}M1_{e1}M2_{f1}O_{2-f1}$

In the Chemical Formula 1,

It is that $0.97{\leq}a1{\leq}1.05$, $0.75{\leq}b1{\leq}0.95$, $0.09{\leq}c1{\leq}0.18$, $0{\leq}d1{\leq}0.09$, $0{\leq}e1{\leq}0.05$, $0{\leq}f1{\leq}0.01$, $b1+c1+d1+e1=1$,
M1 is one selected from Na, Mg, Al, Si, K, Ca, Sc, Ti, V, Cr, Cu, Zn, Ga, Ge, Rb, Sr, Y, Zr, Nb, Mo, Tc, Ru, Rh, Pd, Ag, Cd, In, Sn, Ba, W and combination thereof, and
M2 is one selected from N, F, P, S, Cl, Br, I and combination thereof.

[Chemical Formula 2]  $\qquad$ $Li_{a2}Ni_{b2}CO_{c2}Mn_{d2}M3_{e2}M4_{f2}O_{2-f2}$

In the Chemical Formula 2,

it is that $1.0{\leq}a2{\leq}1.1$, $0.4{\leq}b2{\leq}0.75$, $0.1{\leq}c2{\leq}0.4$, $0.1{\leq}d2{\leq}0.4$, $0{\leq}e2{\leq}0.05$, $0{\leq}f2{\leq}0.01$, $b2+c2+d2+e2=1$,
M3 is one selected from Na, Mg, Al, Si, K, Ca, Sc, Ti, V, Cr, Cu, Zn, Ga, Ge, Rb, Sr, Y, Zr, Nb, Mo, Tc, Ru, Rh, Pd, Ag, Cd, In, Sn, Ba, W and combination thereof, and

M4 is one selected from N, F, P, S, CI, Br, I and combination thereof.

At this time, a content of the first compound may range from 70 wt% to 95 wt% based on 100 wt% of the positive electrode active material.

In addition, in the Chemical Formula 1, b1 may range from 0.8 to 0.95.

The first compound may be at least one selected from $Ni_{0.80}Co_{0.10}Mn_{0.10}$, $Ni_{0.80}Co_{0.12}Mn_{0.08}$, $Ni_{0.83}Co_{0.10}Mn_{0.07}$, $Ni_{0.83}Co_{0.12}Mn_{0.05}$, $Ni_{0.85}Co_{0.10}Mn_{0.05}$, $Ni_{0.85}Co_{0.10}Mn_{0.03}Al_{0.02}$, $Ni_{0.06}Co_{0.09}Mn_{0.03}Al_{0.02}$, $Ni_{0.88}Co_{0.09}Mn_{0.03}$, $Ni_{0.9}Co_{0.08}Mn_{0.02}$, and $Ni_{0.95}Co_{0.03}Mn_{0.02}$.

An average particle diameter D50 of the first compound may range from $13.0\mu m$ to $20.0\mu m$.

In the Chemical Formula 2, b2 may range from 0.5 to 0.7.

The second compound may be at least one selected from $Ni_{0.5}Co_{0.2}Mn_{0.3}$, $Ni_{0.50}CO_{0.25}Mn_{0.25}$, $Ni_{0.55}Co_{0.20}Mn_{0.25}$, $Ni_{0.6}Co_{0.2}Mn_{0.2}$, $Ni_{0.65}Co_{0.15}Mn_{0.20}$, and $Ni_{0.65}Co_{0.17}Mn_{0.18}$.

An average particle diameter D50 of the second compound may range from $3.0\mu m$ to $6.0\mu m$.

An average particle diameter of the positive electrode active material for the lithium secondary battery may range from $10\mu m$ to $20\mu m$.

The tap density of the first compound may range from 2.2 g/cc to 2.8 g/cc.

The tap density of the second compound may range from 1.5 g/cc to 2.2 g/cc.

A tap density of the positive electrode active material for the lithium secondary battery may be 2.2 g/cc to 2.8 g/cc.

In another aspect, In one aspect, a positive electrode for lithium secondary battery according to an exemplary embodiment may comprise the positive electrode active material for a lithium secondary battery according to any one of claims 1 to 12, and an electrolyte.

Since the positive electrode active material for a lithium secondary battery according to exemplary embodiments may improve the pellet density, it is possible to implement a lithium secondary battery having a high energy density and remarkably improved thermal stability when applied.

## BRIEF DESCRIPTION OF THE DRAWINGS

FIG. 1 is a schematic view of a lithium secondary battery according to an exemplary embodiment.

FIG. 2 is a measurement result of a fillet density for the positive electrode active material prepared according to Exemplary embodiment 1 to 3 and Comparative Example 1 to 2 and 8

FIG. 3 is a measurement result of a fillet density for the positive electrode active material prepared according to Exemplary embodiment 1 to 3 and Comparative Example 1 to 2.

## DETAILED DESCRIPTION OF THE EMBODIMENTS

Hereinafter, with reference to the accompanying drawings, various embodiments of the present invention will be described in detail so that those of ordinary skill in the art can easily carry out the present invention. However, the present invention may be embodied in many different forms and is not construed as limited to the exemplary embodiments described herein.

In order to clearly describe the present invention, parts irrelevant to the description are omitted, and the same reference numerals are assigned to the same or similar elements throughout the specification.

In addition, since the size and thickness of each component shown in the drawings are arbitrarily indicated for convenience of description, the present invention is not necessarily limited to the illustrated bar.

In addition, unless explicitly described to the contrary, the word "comprise", and variations such as "comprises" or "comprising", will be understood to imply the inclusion of stated elements but not the exclusion of any other elements.

A positive electrode active material for lithium secondary battery according to an exemplary embodiment of the present disclosure may comprise a first compound represented by Chemical Formula 1 and a second compound represented by Chemical Formula 2, wherein, a content of the first compound may be 65 wt% or more based on 100 wt% of the positive electrode active material.

More specifically, a content of the first compound may range from 75 wt% to 95 wt% or 80 wt% to 95 wt%. When the content of the first compound satisfies the above range, there is an advantage that high energy density may be realized through high capacity and high density when the positive electrode active material according to the exemplary embodiment is applied to a lithium secondary battery.

Next, the first compound represented by Chemical Formula 1 is as follows.

[Chemical Formula 1]    $Li_{a1}Ni_{b1}Co_{c1}Mn_{d1}M1_{e1}M2_{f1}O_{2-f1}$

In the Chemical Formula 1, It is that $0.97 \leq a1 \leq 1.05$, $0.75 \leq b1 \leq 0.95$, $0.09 < c1 \leq 0.18$, $0 < d1 \leq 0.09$, $0 \leq e1 \leq 0.05$, $0 \leq f1 \leq 0.01$, $b1+c1+d1+e1=1$, M1 is one selected from Na, Mg, Al, Si, K, Ca, Sc, Ti, V, Cr, Cu, Zn, Ga, Ge, Rb, Sr, Y, Zr, Nb, Mo, Tc, Ru, Rh, Pd, Ag, Cd, In, Sn, Ba, Wand combination thereof, and M2 is one selected from N, F, P, S, Cl, Br, I and combination thereof.

In the Chemical Formula 1, b1 may range from 0.8 to 0.95, and more specifically, b1 may range from 0.82 to 0.90. When the molar ratio of Ni in Chemical Formula 1 satisfies the above range, it is very advantageous to realize a battery having a high energy density based on a high capacity of 200 mAh/g or more. when the positive electrode active material according to the exemplary embodiment is applied to a lithium secondary battery.

For example, the first compound may be at least one selected from $Ni_{0.80}CO_{0.10}Mn_{0.10}$, $Ni_{0.80}Co_{0.12}Mn_{0.08}$, $Ni_{0.83}CO_{0.10}Mn_{0.07}$, $Ni_{0.83}Co_{0.12}Mn_{0.05}$, $Ni_{0.85}Co_{0.10}Mn_{0.05}$, $Ni_{0.85}Co_{0.10}Mn_{0.03}Al_{0.02}$, $Ni_{0.86}Co_{0.09}Mn_{0.03}Al_{0.02}$, $Ni_{0.88}Co_{0.09}Mn_{0.03}$, $Ni_{0.9}Co_{0.08}Mn_{0.02}$, and $Ni_{0.95}Co_{0.03}Mn_{0.02}$.

The average particle diameter D50 of the first compound may range, for example, from $13.0 \mu m$ to $20.0 \mu m$, and more specifically, from $14.0 \mu m$ to $19.0 \mu m$ or $16.0 \mu m$ to $18.0 \mu m$. When the average particle diameter of the first compound satisfies the above range, it has an advantageous effect in that the rolling density is further increased when mixed and applied with the second compound.

That is, in the present disclosure, the average particle diameter (D50) of the first compound has a larger value than the average particle diameter (D50) of the second compound.

In the present specification, an average particle diameter(D50) means a diameter of particles having a cumulative volume of 50% by volume in the particle size distribution.

The tap density of the first compound may range from 2.2 g/cc to 2.8 g/cc or 2.4 g/cc to 2.7 g/cc. When the tap density of the first compound satisfies the above range, it has an advantageous effect in terms of implementing a high rolling density.

In the present specification, tap density may be measured by a method generally used in the art as a method for measuring the filling degree of a sample per unit volume. For example, according to the measuring device and method specified in ASTM B527, it may be the density (sample weight/volume) calculated through the changed volume change after tapping the measuring container into which the sample is placed from a mechanically constant height a predetermined number of times.

Next, the second compound represented by Chemical Formula 2 is as follows.

[Chemical Formula 2]     $Li_{a2}Ni_{b2}CO_{c2}Mn_{d2}M3_{e2}M4_{f2}O_{2-f2}$

In the Chemical Formula 2, it is that $1.0 \leq a2 \leq 1.1$, $0.4 \leq 5b2 < 0.75$, $0.1 \leq c2 \leq 0.4$, $0.1 \leq d2 \leq 0.4$, $0 \leq e2 \leq 0.05$, $0 \leq f2 \leq 0.01$, $b2+c2+d2+e2=1$, M3 is one selected from Na, Mg, Al, Si, K, Ca, Sc, Ti, V, Cr, Cu, Zn, Ga, Ge, Rb, Sr, Y, Zr, Nb, Mo, Tc, Ru, Rh, Pd, Ag, Cd, In, Sn, Ba, Wand combination thereof, and M4 is one selected from N, F, P, S, Cl, Br, I and combination thereof.

In the Chemical Formula 2, b2 may range from 0.5 to 0.7, and more specifically, b2 may range from 0.55 to 0.65. When the molar ratio of Ni in Chemical Formula 2 satisfies the above range, there is an advantage in that thermal stability is excellent.

The second compound may be at least one selected from $Ni_{0.5}Co_{0.2}Mn_{0.3}$, $Ni_{0.50}Co_{0.25}Mn_{0.25}$, $Ni_{0.55}Co_{0.20}Mn_{0.25}$, $Ni_{0.6}Co_{0.2}Mn_{0.2}$, $Ni_{0.65}Co_{0.15}Mn_{0.20}$, and $Ni_{0.65}Co_{0.17}Mn_{0.18}$.

An average particle diameter D50 of the second compound may range, for example, from $3.0 \mu m$ to $6.0 \mu m$, and more specifically, from $3.5 \mu m$ to $4.0 \mu m$ or $4.0 \mu m$ to $5.0 \mu m$. When the average particle diameter of the second compound satisfies the above range, it has an advantageous effect in that the rolling density is further increased when mixed and applied with the first compound.

The tap density of the second compound may range from 1.5 g/cc to 2.2 g/cc or 1.8 g/cc to 2.1 g/cc. When the tap density of the second compound satisfies the above range, it has an advantageous effect in terms of implementing a high rolling density when mixed and applied with the first compound.

Meanwhile, the average particle diameter of the positive electrode active material for a lithium secondary battery according to an exemplary embodiment of the present invention, that is, the positive electrode active material comprising the first compound and the second compound, may range from $10.0 \mu m$ to $20.0 \mu m$. More specifically, it may range from $13.0 \mu m$ to $18.0 \mu m$ or $14.0 \mu m$ to $16.0 \mu m$. When the average particle diameter of the positive electrode active material satisfies the above range, there is an advantage that a lithium secondary battery having excellent thermal stability and high energy density may be realized.

The tap density of the positive electrode active material for the lithium secondary battery may range, for example, from 2.2g/cc to 2.8g/cc or 2.4g/cc to 2.7g/cc. When the tap density of the positive electrode active material satisfies the above range, it has an advantageous effect in terms of implementing a high rolling density when applied to the positive electrode.

The above-described positive electrode active material may be usefully used for a positive electrode of a lithium secondary battery. That is, the lithium secondary battery according to an exemplary embodiment includes a positive electrode including the above-described positive electrode active material with together a negative electrode and an electrolyte.

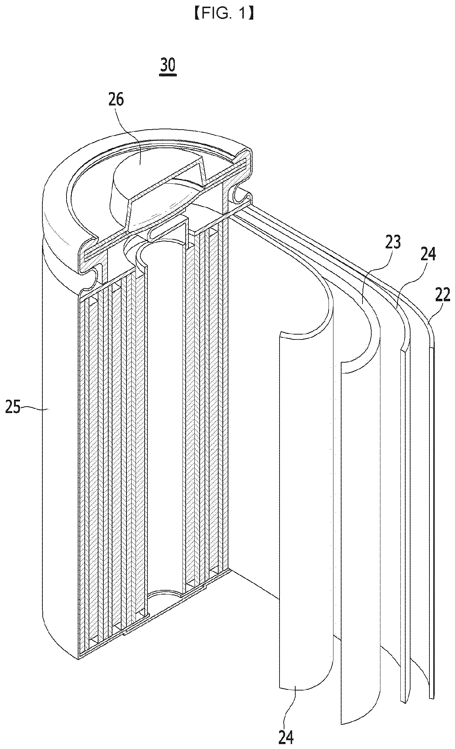

FIG. 1 schematically shows the structure of a lithium secondary battery according to an exemplary embodiment.

Referring to FIG.1, the lithium secondary battery 30 may include an electrode assembly including a positive electrode 23, a negative electrode 22, and a separator 24 disposed between the positive electrode 23 and the negative electrode 22. The electrode assembly is wound or folded and housed in the battery container 25.

Thereafter, the electrolyte is injected into the battery container 25 and sealed with the sealing member 26 to complete the lithium secondary battery 30. At this time, the battery container 25 may have a cylindrical shape, a square shape, a pouch shape, a coin shape, or the like.

The negative electrode 22 prepares a composition for forming a negative active material layer by mixing a negative active material, a binder and optionally a conductive material.

It can be manufactured by applying this to a negative electrode current collector such as copper.

As the negative active material, a material capable of intercalation/deintercalation of lithium is used, and for example, lithium metal, lithium alloy, coke, artificial graphite, natural graphite, organic polymer compound combust body, carbon fiber, etc. are used.

As the binder, polyvinyl alcohol, carboxymethyl cellulose/styrene-butadiene rubber, hydroxypropylene cellulose, diacetylene cellulose, polyvinyl chloride, polyvinylpyrrolidone, polytetrafluoroethylene, polyvinylidene fluoride, polyethylene or polypropylene, etc. can be used, but is not limited thereto. The binder may be mixed in an amount of 1 to 30 wt% based on the total amount of the composition for forming the negative active material layer.

The conductive material is not particularly limited as long as it has conductivity without causing chemical change in the battery. Specifically, graphite, such as natural graphite and artificial graphite; carbon black such as acetylene black, Ketjen black, channel black, furnace black, lamp black, and summer black; conductive fibers such as carbon fibers and metal fibers; metal powder such as fluorinated carbon, aluminum, nickel powder; conductive whiskey such as zinc oxide and potassium titanate; conductive metal oxides such as titanium oxide; or conductive material such as polyphenylene derivative; may be used. The conductive material may be mixed in 0.1 to 30 wt% with respect to the total amount of the composition for forming the negative active material layer.

The positive electrode 23 includes a positive electrode active material manufactured by the positive electrode active material manufacturing method according to an exemplary embodiment. That is, a composition for forming a positive electrode active material layer is prepared by mixing the aforementioned positive electrode active material, a binder and optionally a conductive material. After that, the electrode can be manufactured by applying the composition to a positive electrode current collector such as aluminum. In addition, the conductive material, binder, and solvent are used in the same manner as in the case of the negative electrode described above.

As the electrolyte filled in the lithium secondary battery **30,** a non-aqueous electrolyte or a known solid electrolyte may be used, and a lithium salt dissolved therein may be used.

The lithium salt may be, for example, at least one selected from the group consisting of $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiSbF_6$, $LiAlO_4$, $LiAlCl_4$, $LiCl$, and $Lil$.

As the solvent of the non-aqueous electrolyte, for example, a cyclic carbonate such as ethylene carbonate, propylene carbonate, butylene carbonate, or vinylene carbonate; a chain carbonate such as dimethyl carbonate, methyl ethyl carbonate, and diethyl carbonate; esters such as methyl acetate, ethyl acetate, propyl acetate, methyl propionate, ethyl propionate, and $\gamma$-butyrolactone; ethers such as 1,2-dimethoxyethane, 1,2-diethoxyethane, tetrahydrofuran, 1,2-dioxane, and 2-methyltetrahydrofuran; nitriles such as acetonitrile; and amides such as dimethylformamide may be used, but is not limited thereto. These may be used individually or in combination of two or more. In particular, a mixed solvent of a cyclic carbonate and a chain carbonate may be preferably used.

Moreover, as an electrolyte, the gel polymer electrolyte which impregnated the electrolyte solution in polymer electrolytes, such as polyethylene oxide and polyacrylonitrile, and inorganic solid electrolytes, such as Lil and Li3N, are possible.

The separator **24** may be formed of an olefin-based polymer such as chemical-resistant and hydrophobic polypropylene; and sheets or non-woven fabrics made of glass fiber, polyethylene. When a solid electrolyte such as a polymer is used as the electrolyte, the solid electrolyte may also serve as a separator.

Hereinafter, the present invention will be described in more detail through Experimental Examples. These Experimental Examples are merely for illustrating the present invention, and the present invention is not limited thereto.

**Example 1**

**(1) Preparation of positive electrode**

A first compound represented by $Ni_{0.88}Co_{0.09}Mn_{0.03}$ and a second compound represented by $Ni_{0.6}CO_{0.2}Mn_{0.2}$ were prepared using a co-precipitation reactor having a working volume of 100L.
In this case, the average particle diameter (D50) of the first compound was 13.6 $\mu$m, and the average particle diameter (D50) of the second compound was 5.3 $\mu$m.
Based on the total positive electrode active material, 80 wt% of the first compound and 20 wt% of the second compound were mixed to prepare a positive electrode active material.
97 wt% of the prepared positive electrode active material, 1.5 wt% of an acetylene blend conductive material, and 1.5 wt% of a polyvinylidene fluoride binder were mixed in an N-methyl pyrrolidone solvent to prepare a positive electrode active material slurry.
The positive electrode active material slurry was evenly applied to the aluminum (Al) current collector, pressed in a roll press, and vacuum dried in a vacuum oven at 100°C for 12 hours to prepare a positive electrode.

**(2) Preparation of lithium secondary battery**

Lithium metal (Li-metal) was used as the positive electrode and the counter electrode prepared in 1 above, and as the electrolyte, 1 mol of LiPF6 solution was dissolved in a mixed solvent of ethylene carbonate (EC, Ethylene Carbonate): dimethyl carbonate (DMC, Dimethyl Carbonate) in a volume ratio of 1:1.
Using each of the above components, a coin cell type half coin cell was manufactured according to a conventional manufacturing method.

**Example 2**

A positive electrode and a lithium secondary battery were prepared in the same manner as in Example 1, except for preparing a positive electrode active material by mixing 90 wt% of the first compound and 10 wt% of the second compound based on the total positive electrode active material.

**Example 3**

A positive electrode and a lithium secondary battery were prepared in the same manner as in Example 1, except for preparing a positive electrode active material by mixing 70 wt% of the first compound and 30 wt% of the second compound based on the total positive electrode active material.

**Example 4**

A positive electrode and a lithium secondary battery were prepared in the same manner as in Example 1, except for preparing a positive electrode active material by having and an average particle diameter (D50) of the first compound was 18.7 $\mu$m and the average particle diameter (D50) of the second compound was 5.3 $\mu$m as in Example 1.

**Example 5**

A positive electrode and a lithium secondary battery were prepared in the same manner as in Example 1, except for preparing a positive electrode active material by preparing and mixing a first compound represented by $Ni_{0.85}Co_{0.10}Mn_{0.05}$ and a second compound represented by $Ni_{0.6}Co_{0.2}Mn_{0.2}$ using a co-precipitation reactor having a working volume of 100L.

**Example 6**

A positive electrode and a lithium secondary battery were prepared in the same manner as in Example 1, except for preparing a positive electrode active material by preparing and mixing a first compound represented by $Ni_{0.9}Co_{0.08}Mn_{0.02}$ and a second compound represented by $Ni_{0.6}Co_{0.2}Mn_{0.2}$ using a co-precipitation reactor having a working volume of 100L.

**Comparative Example 1**

**(1) Preparation of positive electrode**

A compound represented by $Ni_{0.88}Co_{0.09}Mn_{0.03}$ was prepared using a co-precipitation reactor having a working volume of 100L, and then a positive electrode active material containing it was prepared.

97 wt% of the prepared positive electrode active material, 1.5 wt% of an acetylene blend conductive material, and 1.5 wt% of a polyvinylidene fluoride binder were mixed in an N-methyl pyrrolidone solvent to prepare a positive electrode active material slurry.

The positive electrode active material slurry was evenly applied to the aluminum (Al) current collector, pressed in a roll press, and vacuum dried in a vacuum oven at 100°C for 12 hours to prepare a positive electrode.

**(2) Preparation of lithium secondary battery**

Lithium metal (Li-metal) was used as the positive electrode and the counter electrode prepared in 1 above, and as the electrolyte, 1 mol of LiPF6 solution was dissolved in a mixed solvent of ethylene carbonate (EC, Ethylene Carbonate): dimethyl carbonate (DMC, Dimethyl Carbonate) in a volume ratio of 1:1.

Using each of the above components, a coin cell type half coin cell was manufactured according to a conventional manufacturing method.

**Comparative Example 2**

A positive electrode and a lithium secondary battery were prepared in the same manner as in Comparative Example 1, except for preparing a positive electrode active material by preparing a compound represented by $Ni_{0.6}CO_{0.2}Mn_{0.2}$, and then a positive electrode active material containing it.

**Comparative Example 3**

A positive electrode and a lithium secondary battery were prepared in the same manner as in Comparative Example 1, except for preparing a positive electrode active material by preparing a compound represented by $Ni_{0.80}Co_{0.12}Mn_{0.08}$, and then a positive electrode active material containing it.

**Comparative Example 4**

A positive electrode and a lithium secondary battery were prepared in the same manner as in Comparative Example 1, except for preparing a positive electrode active material by preparing a compound represented by $Ni_{0.83}Co_{0.10}Mn_{0.07}$, and then a positive electrode active material containing it.

**Comparative Example 5**

A positive electrode and a lithium secondary battery were prepared in the same manner as in Comparative Example 1, except for preparing a positive electrode active material by preparing a compound represented by $Ni_{0.85}Co_{0.10}Mn_{0.05}$, and then a positive electrode active material containing it.

**Comparative Example 6**

A positive electrode and a lithium secondary battery were prepared in the same manner as in Example 1, except for preparing a positive electrode active material by mixing the first compound having a diameter of 14.2 $\mu$m and represented by $Ni_{0.83}Co_{0.10}Mn_{0.07}$ and the second compound having a diameter of 4.8 $\mu$m and represented by $Ni_{0.83}Co_{0.10}Mn_{0.07}$ in a weight ratio of 8:2(first compound: second compound).

**Comparative Example 7**

A positive electrode and a lithium secondary battery were prepared in the same manner as in Example 1, except for preparing a positive electrode active material by mixing the first compound having a diameter of 14.4$\mu$m and represented by $Ni_{0.60}Co_{0.20}Mn_{0.20}$ and the second compound having a diameter of 5.3$\mu$m and represented by $Ni_{0.60}Co_{0.20}Mn_{0.20}$ in a weight ratio of 8:2(first compound: second compound).

**Comparative Example 8**

A positive electrode and a lithium secondary battery were prepared in the same manner as in Example 1, except for preparing a positive electrode active material by mixing the first compound having a diameter of 13.6 $\mu$m and represented by $Ni_{0.88}Co_{0.09}Mn_{0.03}$ and the second compound having a diameter of 5.3 $\mu$m and represented by $Ni_{0.6}Co_{0.2}Mn_{0.2}$ in a weight ratio of 6:4(first compound: second compound).

The composition of the large particle and small particle, mixing ratio, particle size, and average composition of the positive electrode active material according to Examples 1 to 6 and Comparative Examples 1 to 8 are shown in Table 1 below.

(Table 1)

| No. | Composition | Mixing ratio | Particle Size($\mu$m) | | Average composition |
|---|---|---|---|---|---|
| | | | Before mixing | After mixing | |
| Example 1 | $Ni_{0.88}Co_{0.09}Mn_{0.03}$ | 8 | 13.6 | 12.0 | $Ni_{0.83}Co_{0.11}Mn_{0.06}$ |
| | $Ni_{0.60}Co_{0.20}Mn_{0.20}$ | 2 | 5.3 | | |
| Example 2 | $Ni_{0.88}Co_{0.09}Mn_{0.03}$ | 9 | 13.6 | 12.9 | $Ni_{0.85}Co_{0.10}Mn_{0.05}$ |
| | $Ni_{0.60}Co_{0.20}Mn_{0.20}$ | 1 | 5.3 | | |
| Example 3 | $Ni_{0.88}Co_{0.09}Mn_{0.03}$ | 7 | 13.6 | 11.3 | $Ni_{0.80}Co_{0.12}Mn_{0.08}$ |
| | $Ni_{0.60}Co_{0.20}Mn_{0.20}$ | 3 | 5.3 | | |
| Example 4 | $Ni_{0.88}Co_{0.09}Mn_{0.03}$ | 8 | 18.7 | 16.6 | $Ni_{0.83}Co_{0.11}Mn_{0.06}$ |
| | $Ni_{0.60}Co_{0.20}Mn_{0.20}$ | 2 | 5.3 | | |
| Example 5 | $Ni_{0.85}Co_{0.10}Mn_{0.05}$ | 8 | 14.4 | 12.9 | $Ni_{0.80}Co_{0.12}Mn_{0.08}$ |
| | $Ni_{0.60}Co_{0.20}Mn_{0.20}$ | 2 | 5.3 | | |
| Example 6 | $Ni_{0.90}Co_{0.08}Mn_{0.02}$ | 8 | 16.1 | 14.3 | $Ni_{0.84}Co_{0.10}Mn_{0.06}$ |
| | $Ni_{0.60}Co_{0.20}Mn_{0.20}$ | 2 | 5.3 | | |
| Comparative Example 1 | $Ni_{0.88}Co_{0.09}Mn_{0.03}$ | - | 13.6 | | $Ni_{0.88}Co_{0.09}Mn_{0.03}$ |
| Comparative Example 2 | $Ni_{0.60}Co_{0.20}Mn_{0.20}$ | - | 5.3 | | $Ni_{0.60}Co_{0.20}Mn_{0.20}$ |
| Comparative Example 3 | $Ni_{0.80}Co_{0.12}Mn_{0.08}$ | - | 13.2 | | $Ni_{0.80}Co_{0.12}Mn_{0.08}$ |
| Comparative Example 4 | $Ni_{0.83}Co_{0.10}Mn_{0.07}$ | - | 14.2 | | $Ni_{0.83}Co_{0.10}Mn_{0.07}$ |
| Comparative Example 5 | $Ni_{0.85}Co_{0.10}Mn_{0.05}$ | - | 14.4 | | $Ni_{0.85}Co_{0.10}Mn_{0.05}$ |
| Comparative Example 6 | $Ni_{0.83}Co_{0.10}Mn_{0.07}$ | 8 | 14.2 | 12.3 | $Ni_{0.83}Co_{0.10}Mn_{0.07}$ |
| | $Ni_{0.83}Co_{0.10}Mn_{0.07}$ | 2 | 4.8 | | |
| Comparative Example 7 | $Ni_{0.60}Co_{0.20}Mn_{0.20}$ | 8 | 14.4 | 12.6 | $Ni_{0.60}Co_{0.20}Mn_{0.20}$ |
| | $Ni_{0.60}Co_{0.20}Mn_{0.20}$ | 2 | 5.3 | | |
| Comparative Example 8 | $Ni_{0.88}Co_{0.09}Mn_{0.03}$ | 6 | 13.6 | 10.1 | $Ni_{0.77}Co_{0.13}Mn_{0.10}$ |
| | $Ni_{0.60}Co_{0.20}Mn_{0.20}$ | 4 | 5.3 | | |

**Experimental Example 1 - Pellet Density Measurement**

**(1) Preparation of pellets and measurement of density**

The equipment used is a CARVER 4350L model, and the pellet preparation and pellet density measurement method using it are as follows.

The height in the blank state for the dedicated pressurizing mold in the equipment was measured with Vernier calipers.

Next, after putting 3.0 g of the positive electrode active material prepared according to Examples 1 to 4 and Comparative Examples 1 to 2 and maintaining it at a predetermined pressure for 30 seconds, the pressure applied to the pressurizing mold was released, and the height of the pressurizing mold was measured using Vernier calipers.

At this time, pellets were prepared by applying pressure in units of 0.5 tons from 2.5 tons to 5.0 tons with respect to the positive electrode active materials.

Thereafter, the pellet density was calculated according to the following formula.

[Formula]

$$\text{pellet density (g/cm}^3\text{)} = \text{active material weight (g) / pellet volume (cm}^3\text{)}$$

$$\text{(pellet volume} = \text{mold radius} \times \text{mold radius} \times 3.14 \times \text{pellet height)}$$

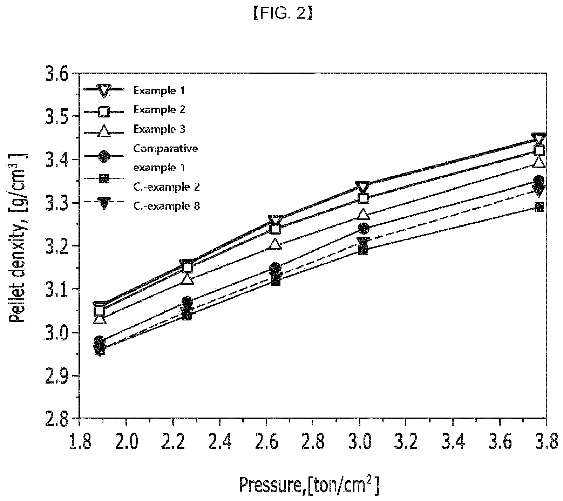

For the pellet prepared using the positive electrode active materials prepared according to Examples 1 to 3 and Comparative Examples 1 to 2 and 8, the pellet density according to the pressurizing pressure was measured, and the results are shown in FIG. 2.

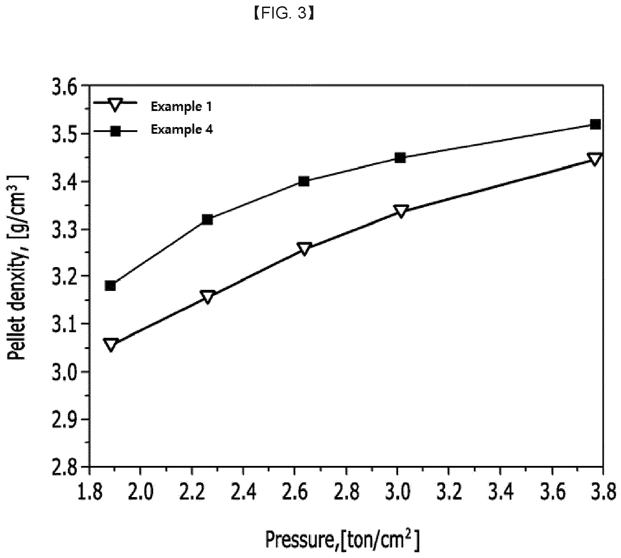

The difference in density of the pellets compared with the pellets prepared using the positive electrode active material prepared according to Example 1 for the pellet prepared using the positive electrode active material prepared according to Example 4 is shown in FIG. 3.

**Experimental Example 2** - **Thermal stability evaluation**

Thermal stability evaluation of the lithium secondary batteries prepared according to Examples 1 to 6 and Comparative Examples 1 to 8 was performed as follows. In this case, the lithium secondary batteries according to Examples 1 and 2 and Comparative Examples 1 and 2 were prepared by preparing respectively two samples to evaluate thermal stability, and the average values thereof are described in the table below.

After charging and discharging the lithium secondary battery once at a cut-off voltage of 2.5V to 4.25V at 0.2C (formation process), charging was performed once with a 4.25V cut-off voltage at 0.2C.

After the positive electrode is recovered from the battery which is completely charged in a dry room without moisture, it is washed with DMC (dimethyl carbonate) and dried naturally.

After that, 3 electrodes of 3pi size (total of 4.5mg) were obtained using a 3pi electrode puncher. After that, 0.5 $\mu$l of electrolyte solution (1M $LiPF_6$ EC/DMC/EMC = 30/40/30 (Vol. %)) was added to the gold-plated 30 $\mu$l withstand voltage cell along with the three electrodes, and the change in calorific value was measured using a differential scanning calorimetry (DSC) device.

The calorific change was measured by maintaining the temperature at 30°C for 10 minutes and then increasing the temperature from 30°C to 350°C at a rate of 10°C per minute.

Table 2 below shows the thermal stability evaluation results, that is, the crystallization initiation temperature (onset), the maximum peak temperature, and the calculated calorific value (the value obtained by integrating the exothermic value curve on the DSC with respect to the temperature).

(Table 2)

| No. | Composition | Mixing ratio | DSC | | |
|---|---|---|---|---|---|
| | | | Onset (°C) | Peak (°C) | Calorific Value (J/g) |
| Example 1 | $Ni_{0.88}Co_{0.09}Mn_{0.03}$ | 8 | 222.4 | 232.8 | 863.4 |
| | $Ni_{0.60}Co_{0.20}Mn_{0.20}$ | 2 | | | |
| Example 2 | $Ni_{0.88}Co_{0.09}Mn_{0.03}$ | 9 | 218.4 | 227.7 | 869.6 |
| | $Ni_{0.60}Co_{0.20}Mn_{0.20}$ | 1 | | | |
| Example 3 | $Ni_{0.88}Co_{0.09}Mn_{0.03}$ | 7 | 224.2 | 234.8 | 865.5 |
| | $Ni_{0.60}Co_{0.20}Mn_{0.20}$ | 3 | | | |
| Example 4 | $Ni_{0.88}Co_{0.09}Mn_{0.03}$ | 8 | 222.1 | 231.9 | 926.3 |
| | $Ni_{0.60}Co_{0.20}Mn_{0.20}$ | 2 | | | |

(continued)

| No. | Composition | Mixing ratio | DSC | | |
|---|---|---|---|---|---|
| | | | Onset (°C) | Peak (°C) | Calorific Value (J/g) |
| Example 5 | $Ni_{0.85}Co_{0.10}Mn_{0.05}$ | 8 | 222.1 | 234.2 | 943.2 |
| | $Ni_{0.60}Co_{0.20}Mn_{0.20}$ | 2 | | | |
| Example 6 | $Ni_{0.90}Co_{0.08}Mn_{0.02}$ | 8 | 212.6 | 230.0 | 1019.9 |
| | $Ni_{0.60}Co_{0.20}Mn_{0.20}$ | 2 | | | |
| Comparative Example 1 | $Ni_{0.88}Co_{0.09}Mn_{0.03}$ | - | 217.6 | 226.6 | 1523.4 |
| Comparative Example 2 | $Ni_{0.60}Co_{0.20}Mn_{0.20}$ | - | 239.2 | 265.8 | 564.7 |
| Comparative Example 3 | $Ni_{0.80}Co_{0.12}Mn_{0.08}$ | - | 222.1 | 230.3 | 1102.4 |
| Comparative Example 4 | $Ni_{0.83}Co_{0.10}Mn_{0.07}$ | - | 214.0 | 227.7 | 1345.7 |
| Comparative Example 5 | $Ni_{0.85}Co_{0.10}Mn_{0.05}$ | - | 218.7 | 226.7 | 1054.8 |
| Comparative Example 6 | $Ni_{0.83}Co_{0.10}Mn_{0.07}$ | 8 | 217.8 | 227.6 | 1345.7 |
| | $Ni_{0.83}Co_{0.10}Mn_{0.07}$ | 2 | | | |
| Comparative Example 7 | $Ni_{0.60}Co_{0.20}Mn_{0.20}$ | 8 | 235.1 | 265.4 | 527.3 |
| | $Ni_{0.60}Co_{0.20}Mn_{0.20}$ | 2 | | | |
| Comparative Example 8 | $Ni_{0.88}Co_{0.09}Mn_{0.03}$ | 6 | 221.4 | 236.3 | 775.5 |
| | $Ni_{0.60}Co_{0.20}Mn_{0.20}$ | 4 | | | |

**Experimental Example 3 - Electrochemical characteristic evaluation**

The charging and discharging capacities of the lithium secondary batteries prepared according to Examples 1 to 6 and Comparative Examples 1 to 8 were evaluated.

First, using a charge/discharger (Toscat-3000) to which a constant current is applied, charging and discharging were performed at 0.2C within the range of 25°C, 2.5V to 4.25V, and the initial charge/discharge capacity and efficiency are shown in Table 3 below.

(Table 3)

| No. | Composition | Mixing ratio | electrochemical characteristic | | |
|---|---|---|---|---|---|
| | | | charge (mAh/g) | discharge (mAh/g) | efficiency (%) |
| Example 1 | $Ni_{0.88}Co_{0.09}Mn_{0.03}$ | 8 | 226.9 | 205.6 | 90.6 |
| | $Ni_{0.60}Co_{0.20}Mn_{0.20}$ | 2 | | | |
| Example 2 | $Ni_{0.88}Co_{0.09}Mn_{0.03}$ | 9 | 231.7 | 210.4 | 90.8 |
| | $Ni_{0.60}Co_{0.20}Mn_{0.20}$ | 1 | | | |
| Example 3 | $Ni_{0.88}Co_{0.09}Mn_{0.03}$ | 7 | 223.2 | 202.3 | 90.6 |
| | $Ni_{0.60}Co_{0.20}Mn_{0.20}$ | 3 | | | |
| Example 4 | $Ni_{0.88}Co_{0.09}Mn_{0.03}$ | 8 | 232.1 | 204.9 | 88.3 |
| | $Ni_{0.60}Co_{0.20}Mn_{0.20}$ | 2 | | | |
| Example 5 | $Ni_{0.85}Co_{0.10}Mn_{0.05}$ | 8 | 221.8 | 196.3 | 88.5 |
| | $Ni_{0.60}Co_{0.20}Mn_{0.20}$ | 2 | | | |
| Example 6 | $Ni_{0.90}Co_{0.08}Mn_{0.02}$ | 8 | 230.2 | 213.6 | 92.8 |
| | $Ni_{0.60}Co_{0.20}Mn_{0.20}$ | 2 | | | |
| Comparative Example 1 | $Ni_{0.88}Co_{0.09}Mn_{0.03}$ | - | 234.3 | 213.2 | 91.0 |

(continued)

| No. | Composition | Mixing ratio | electrochemical characteristic | | |
|---|---|---|---|---|---|
| | | | charge (mAh/g) | discharge (mAh/g) | efficiency (%) |
| Comparative Example 2 | $Ni_{0.60}Co_{0.20}Mn_{0.20}$ | - | 194.8 | 173.8 | 89.2 |
| Comparative Example 3 | $Ni_{0.80}Co_{0.12}Mn_{0.08}$ | - | 221.0 | 196.9 | 89.1 |
| Comparative Example 4 | $Ni_{0.83}Co_{0.10}Mn_{0.07}$ | - | 226.5 | 196.9 | 86.9 |
| Comparative Example 5 | $Ni_{0.85}Co_{0.10}Mn_{0.05}$ | - | 228.6 | 199.0 | 87.0 |
| Comparative Example 6 | $Ni_{0.83}Co_{0.10}Mn_{0.07}$ | 8 | 225.6 | 199.9 | 88.6 |
| | $Ni_{0.83}Co_{0.10}Mn_{0.07}$ | 2 | | | |
| Comparative Example 7 | $Ni_{0.60}Co_{0.20}Mn_{0.20}$ | 8 | 196.7 | 174.1 | 88.5 |
| | $Ni_{0.60}Co_{0.20}Mn_{0.20}$ | 2 | | | |
| Comparative Example 8 | $Ni_{0.88}Co_{0.09}Mn_{0.03}$ | 6 | 218.8 | 195.4 | 89.3 |
| | $Ni_{0.60}Co_{0.20}Mn_{0.20}$ | 4 | | | |

Referring to Tables 1 to 3, it may be seen that the lithium secondary batteries prepared according to Examples 1 to 6 have excellent thermal stability and a very high charge/discharge capacity compared to Comparative Examples having the same composition. On the other hand, it may be seen that the lithium secondary batteries according to Comparative Examples 1 and 3 to 5 to which only the large-particle positive electrode active material is applied have reduced thermal stability or low charge or discharge capacity. In addition, it may be seen that the lithium secondary battery according to Comparative Example 2 to which only the small-particle positive electrode active material is applied also has a remarkably low charge/discharge capacity.

In addition, even if the positive electrode active material comprises both large particle and small particle, it may be seen that the lithium secondary battery according to Comparative Example 6 in which both of these large particle and small particle have a nickel content of 0.75 or more has significantly reduced thermal stability and very low charge and discharge capacity. In addition, it may be seen that the lithium secondary battery according to Comparative Example 7, in which both the large particle and small particle nickel contents of the positive electrode active material are less than 0.75, has excellent thermal stability, but has very low charge and discharge capacities.

On the other hand, in the case of the lithium secondary battery according to Comparative Example 8, which comprises both large particle and small particle in the positive electrode active material, but the content of the large particle is less than 65% by weight, it may be seen that the pellet density is very low, referring to FIG. 2. That is, when the content of small particles in the positive electrode active material increases, as a result, the average particle size and surface area of the positive electrode active material increase, which results in a low pellet density, and accordingly, there is a problem in that the energy density of the lithium secondary battery is lowered.

The present invention is not limited to the implementation exemplary embodiments and/or examples, but may be manufactured in various forms and those skilled in the art will understand that the present invention may be implemented in another specific form without changing the technical spirit or an essential feature thereof. Therefore, it should be appreciated that the aforementioned implementation exemplary embodiments and/or examples are illustrative in all aspects and are not restricted.

**<Description of symbols>**

30:     lithium battery
22:     negative electrode
23:     positive electrode
24:     separator
25:     battery container
26:     sealing member

While this invention has been described in connection with what is presently considered to be practical exemplary embodiments, it is to be understood that the invention is not limited to the disclosed embodiments. On the contrary, it is intended to cover various modifications and equivalent arrangements included within the spirit and scope of the appended claims.

**Claims**

1. A positive electrode active material for lithium secondary battery, comprising:

   a first compound represented by Chemical Formula 1; and
   a second compound represented by Chemical Formula 2, wherein, a content of the first compound is 65 wt% or more based on 100 wt% of the positive electrode active material.

   [Chemical Formula 1]     $Li_{a1}Ni_{b1}Co_{c1}Mn_{d1}M1_{e1}M2_{f1}O_{2-f1}$

   (In the Chemical Formula 1,

   it is that $0.97 \leq a1 \leq 1.05$, $0.75 \leq b1 \leq 0.95$, $0.09 \leq c1 \leq 0.18$, $0 \leq d1 \leq 0.09$, $0 \leq e1 \leq 0.05$, $0 \leq f1 \leq 0.01$, and $b1+c1+d1+e1=1$;
   M1 is one selected from Na, Mg, Al, Si, K, Ca, Sc, Ti, V, Cr, Cu, Zn, Ga, Ge, Rb, Sr, Y, Zr, Nb, Mo, Tc, Ru, Rh, Pd, Ag, Cd, In, Sn, Ba, W and combination thereof; and
   M2 is one selected from N, F, P, S, Cl, Br, I and combination thereof.)

   [Chemical Formula 2]     $Li_{a2}Ni_{b2}Co_{c2}Mn_{d2}M3_{e2}M4_{f2}O_{2-f2}$

   (In the Chemical Formula 2,

   it is that $1.0 \leq a2 \leq 1.1$, $0.4 \leq b2 < 0.75$, $0.1 \leq c2 \leq 0.4$, $0.1 \leq d2 \leq 0.4$, $0 \leq e2 \leq 0.05$, $0 \leq f2 \leq 0.01$, and $b2+c2+d2+e2=1$;
   M3 is one selected from Na, Mg, Al, Si, K, Ca, Sc, Ti, V, Cr, Cu, Zn, Ga, Ge, Rb, Sr, Y, Zr, Nb, Mo, Tc, Ru, Rh, Pd, Ag, Cd, In, Sn, Ba, W and combination thereof; and
   M4 is one selected from N, F, P, S, Cl, Br, I and combination thereof.)

2. The positive electrode active material of claim 1, wherein:
   a content of the first compound ranges from 70 wt% to 95 wt% based on 100 wt% of the positive electrode active material.

3. The positive electrode active material of claim 1, wherein:
   in the Chemical Formula 1, b1 ranges from 0.8 to 0.95.

4. The positive electrode active material of claim 1, wherein:
   the first compound is at least one selected from $Ni_{0.80}Co_{0.10}Mn_{0.10}$, $Ni_{0.80}Co_{0.12}Mn_{0.08}$, $Ni_{0.83}Co_{0.10}Mn_{0.07}$, $Ni_{0.83}Co_{0.12}Mn_{0.05}$, $Ni_{0.85}Co_{0.10}Mn_{0.05}$, $Ni_{0.85}Co_{0.10}Mn_{0.03}Al_{0.02}$, $Ni_{0.86}Co_{0.09}Mn_{0.03}Al_{0.02}$, $Ni_{0.88}Co_{0.09}Mn_{0.03}$, $Ni_{0.9}Co_{0.08}Mn_{0.02}$, and $Ni_{0.95}Co_{0.03}Mn_{0.02}$.

5. The positive electrode active material of claim 1, wherein:
   an average particle diameter D50 of the first compound is in the range of $13.0 \mu m$ to $20.0 \mu m$.

6. The positive electrode active material of claim 1, wherein:
   in the Chemical Formula 2, b2 ranges from 0.5 to 0.7.

7. The positive electrode active material of claim 1, wherein:
   the second compound is at least one selected from $Ni_{0.5}Co_{0.2}Mn_{0.3}$, $Ni_{0.50}Co_{0.25}Mn_{0.25}$, $Ni_{0.55}Co_{0.20}Mn_{0.25}$, $Ni_{0.6}Co_{0.2}Mn_{0.2}$, $Ni_{0.65}Co_{0.15}Mn_{0.20}$, and $Ni_{0.65}Co_{0.17}Mn_{0.18}$.

8. The positive electrode active material of claim 1, wherein:
   an average particle diameter D50 of the second compound is in the $3.0 \mu m$ to $6.0 \mu m$ range.

9. The positive electrode active material of claim 1, wherein:
an average particle diameter of the positive electrode active material for the lithium secondary battery ranges from 10μm to 20μm.

10. The positive electrode active material of claim 1, wherein:
the first compound has a tap density of 2.2 g/cc to 2.8 g/cc.

11. The positive electrode active material of claim 1, wherein:
the second compound has a tap density of 1.5 g/cc to 2.2 g/cc.

12. The positive electrode active material of claim 1, wherein:
a tap density of the positive electrode active material for the lithium secondary battery is 2.2g/cc to 2.8g/cc.

13. A lithium secondary battery, comprising:

a negative electrode;
a positive electrode comprising the positive electrode active material for a lithium secondary battery according to any one of claims 1 to 12; and
an electrolyte.

【FIG. 1】

【FIG. 2】

【FIG. 3】

## INTERNATIONAL SEARCH REPORT

| International application No. |
| --- |
| **PCT/KR2018/015868** |

| A. | CLASSIFICATION OF SUBJECT MATTER |
| --- | --- |

*H01M 4/36(2006.01)i, H01M 4/525(2010.01)i, H01M 4/505(2010.01)i, H01M 10/052(2010.01)i*

According to International Patent Classification (IPC) or to both national classification and IPC

| B. | FIELDS SEARCHED |
| --- | --- |

Minimum documentation searched (classification system followed by classification symbols)

H01M 4/36; C01G 53/00; H01M 10/05; H01M 10/052; H01M 10/0525; H01M 4/02; H01M 4/38; H01M 4/48; H01M 4/485; H01M 4/525; H01M 4/58; H01M 4/505

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: cathode, nickel, cobalt, manganese, rechargeable lithium battery

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2010-0131252 A (SB LIMOTIVE CO., LTD.) 15 December 2010<br>See claims 1-9. | 1-13 |
| Y | JP 2015-164123 A (SUMITOMO METAL MINING CO., LTD.) 10 September 2015<br>See claims 3, 5, 8. | 1-13 |
| A | KR 10-2004-0026378 A (SAMSUNG SDI CO., LTD.) 31 March 2004<br>See paragraphs [0012], [0040], [0075], [0083], [0089] and claims 1-2. | 1-13 |
| A | KR 10-2011-0109879 A (SAMSUNG SDI CO., LTD.) 06 October 2011<br>See paragraphs [0028], [0029], [0050], [0078], [0081]-[0083], claims 1, 2, 4, 11. | 1-13 |
| A | JP 11-162466A (SANYO ELECTRIC CO., LTD.) 18 June 1999<br>See paragraphs [0010], [0015], [0019] and claim 1. | 1-13 |
| E | KR 10-2019-0024423 A (POSCO et al.) 08 March 2019<br>See claims 1-13. | 1-13 |

| ☐ Further documents are listed in the continuation of Box C. | ☒ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 SEPTEMBER 2019 (09.09.2019) | **09 SEPTEMBER 2019 (09.09.2019)** |
| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br>Telephone No. |

Form PCT/ISA/210 (second sheet) (January 2015)

**INTERNATIONAL SEARCH REPORT**
Information on patent family members

International application No.

**PCT/KR2018/015868**

| Patent document cited in search report | Publication date | Patent family member | Publication date |
|---|---|---|---|
| KR 10-2010-0131252 A | 15/12/2010 | CN 101908626 A | 08/12/2010 |
| | | EP 2259370 A2 | 08/12/2010 |
| | | EP 2259370 A3 | 12/01/2011 |
| | | EP 2259370 B1 | 05/03/2014 |
| | | JP 2010-282967 A | 16/12/2010 |
| | | JP 5459671 B2 | 02/04/2014 |
| | | KR 10-1117623 B1 | 29/02/2012 |
| | | US 2010-0310934 A1 | 09/12/2010 |
| | | US 8703339 B2 | 22/04/2014 |
| JP 2015-164123 A | 10/09/2015 | JP 6358077 B2 | 18/07/2018 |
| KR 10-2004-0026378 A | 31/03/2004 | KR 10-0458584 B1 | 03/12/2004 |
| KR 10-2011-0109879 A | 06/10/2011 | CN 102208642 A | 05/10/2011 |
| | | CN 102208642 B | 11/03/2015 |
| | | EP 2372819 A2 | 05/10/2011 |
| | | EP 2372819 A3 | 02/01/2013 |
| | | EP 2372819 B1 | 06/08/2014 |
| | | JP 2011-216485 A | 27/10/2011 |
| | | JP 5868604 B2 | 24/02/2016 |
| | | KR 10-1243912 B1 | 14/03/2013 |
| | | US 2011-0240913 A1 | 06/10/2011 |
| | | US 8871113 B2 | 28/10/2014 |
| JP 11-162466A | 18/06/1999 | None | |
| KR 10-2019-0024423 A | 08/03/2019 | KR 10-1981659 B1 | 23/05/2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170111408